# DEMANDE DE BREVET EUROPEEN

(11) **EP 4 762 978 A1**
(43) Date de publication de la demande: **24.06.2026**
(21) Numéro de dépôt: 24222406.1
(22) Date de dépôt: 20.12.2024
(51) Int. Cl.: A44C 27/00, C09K 11/02, C09K 11/77, G04B 45/00, G04B 47/04, G04B 19/32, A44C 5/00, A44C 5/02, A44C 5/20, C08K 3/36

(54) **COMPOSANT HORLOGER TRANSPARENT OU TRANSLUCIDE AVEC EFFET PHOSPHORESCENT**

(71) Demandeur: The Swatch Group Research and Development Ltd, 2074 Marin (CH)
(72) Inventeur: FRANÇOIS, Nicolas, 2000 Neuchâtel (CH); NAPOLI, Sophie, 2000 Neuchâtel (CH); DOVCIK, Marek, 06250 Mougins (FR); BOURBAN, Stewes, 1589 Chabrey (CH); SAMAKE SHKODRA, Ardiana, 2000 Neuchâtel (CH)
(74) Mandataire: ICB SA

(57) **Abrégé**

L'invention concerne un composant horloger (1) réalisé dans une matière phosphorescente transparente ou translucide, ladite matière comprenant en poids entre 95 et 99,5% d'une résine thermoplastique ou thermodurcissable transparente, entre 0,5 et 5% de composés phosphorescents, entre 0 et 0,3% d'une silice poreuse, entre 0 et 0,3% d'au moins un azurant optique, et entre 0 et 5% d'au moins un colorant et/ou d'au moins un additif.

## Description

### Domaine technique de l'invention

L'invention concerne un composant horloger transparent ou translucide avec un effet phosphorescent. En particulier, le composant horloger peut être un bracelet.

### Arrière-plan technologique

A ce jour, on connait les bracelets transparents et les bracelets phosphorescents. Par contre, les bracelets combinant la transparence avec la phosphorescence ne sont pas présents sur le marché.

### Résumé de l'invention

L'invention vise à pallier ce manquement en proposant une formulation permettant d'obtenir un effet phosphorescent visible de nuit pendant au moins 10 minutes sur un bracelet transparent ou translucide, et de manière générale sur un composant horloger.

A cet effet, il est proposé une nouvelle matière phosphorescente transparente ou translucide avec ladite matière comprenant en poids entre 95 et 99,5% d'une résine thermoplastique ou thermodurcissable transparente, entre 0,5 et 5% de composés phosphorescents, entre 0 et 0,3% d'une silice poreuse, entre 0 et 0,3% d'au moins un azurant optique, et entre 0 et 5% d'au moins un colorant et/ou d'au moins un additif.

Le composant horloger réalisé avec cette matière conserve sa transparence ou translucidité de jour avec un effet luminescent de nuit suffisant.

Préférentiellement, la matière comporte un azurant optique, utile pour contrer le coté jaunâtre du pigment phosphorescent.

Préférentiellement, la matière comporte en outre de la silice poreuse qui permet à la lumière de diffuser de façon homogène dans tout le composant horloger. L'ajout d'un pourcentage limité de silice poreuse dans la matière permet d'améliorer les propriétés de luminescence.

### Brève description de la figure

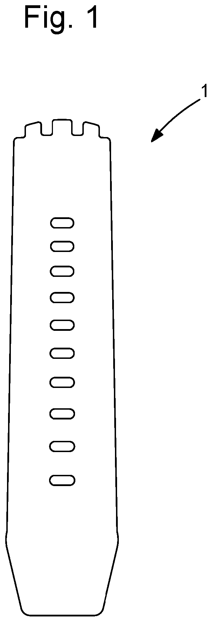

La figure 1 représente à titre illustratif un bracelet obtenu avec la formulation selon l'invention.

### Description détaillée de l'invention

L'invention concerne une matière phosphorescente et transparente ou translucide utilisée pour réaliser en masse un composant horloger. Il peut plus spécifiquement s'agir d'un composant d'habillage choisi parmi la liste non exhaustive comprenant une carrure, un fond, une lunette, un maillon de bracelet, un bracelet, une boucle ardillon, un fermoir, un cadran, une aiguille et un index de cadran. Encore plus spécifiquement, il s'agit d'un bracelet 1 tel que représenté à la figure 1 ou d'une carrure. Il peut également s'agir d'un composant du mouvement tel qu'une masse oscillante.

La matière comporte une résine thermoplastique ou thermodurcissable transparente aux spectres UVs proches et visibles, c.à.d. dans la gamme d'ondes de 200 nm à 750 nm, avec ladite résine formant la matrice polymérique. Elle comporte également des composés phosphorescents. Préférentiellement, elle comporte également de la silice poreuse, qu'on qualifiera aussi de nanoporeuse, et au moins un azurant optique. Optionnellement, elle peut également comporter un ou plusieurs colorants pour obtenir des déclinaisons translucides colorées de la matière. Optionnellement, elle peut également comporter un ou plusieurs additifs.

La matière comprend en poids (est constituée en poids d') entre 95 et 99,5% de la résine thermoplastique ou thermodurcissable, entre 0,5 et 5% de composés phosphorescents, entre 0 et 0,3% de silice poreuse, entre 0 et 0,3% d'azurants optiques, et entre 0 et 5% de l'ensemble des colorants et additifs.

De préférence, la matière comprend en poids (est constituée en poids d') entre 96,9 et 99,2% de la résine thermoplastique ou thermodurcissable, entre 0,7 et 3% de de composés phosphorescents, entre 0,05 et 0,2% de silice poreuse, entre 0,05 et 0,2% d'azurants optiques, et entre 0 et 3% de l'ensemble des colorants et additifs.

Plus préférentiellement, la matière comprend en poids (est constituée en poids d') entre 97,84 et 98,94% de la résine thermoplastique ou thermodurcissable, entre 0,9 et 2% de composés phosphorescents, entre 0,08 et 0,15% de silice poreuse, entre 0,08 et 0,15% d'azurants optiques, et entre 0 et 3% de l'ensemble des colorants et additifs.

Plus préférentiellement, la matière comprend en poids (est constituée en poids d') entre 98,54 et 98,94% de la résine thermoplastique ou thermodurcissable, entre 0,9 et 1,3% de composés phosphorescents, entre 0,08 et 0,13% de silice poreuse, entre 0,08 et 0,13% d'azurants optiques, et entre 0 et 3% de l'ensemble des colorants et additifs.

Si la matière comprend un ou plusieurs colorants, ils sont préférentiellement ajoutés dans un mélange-maître introduit dans la matière lors de la mise en oeuvre. Par exemple, les colorants peuvent être ajoutés via un mélange-maître qui comporte un additif tel que de la cire. Le mélange-maître comporte par ailleurs une résine qui préférentiellement est la même que celle de la matrice polymérique. Dans ce cas, le pourcentage de ladite résine sera comptabilisé sur le produit final avec le pourcentage de résine de la matrice polymérique. Selon une variante non préférée susceptible d'altérer la transparence de la matière, il peut s'agir d'une résine différente de celle de la matrice polymérique. Par exemple, il peut s'agir du PEVA (Polyéthylène acétate de vinyle).

Pour la résine thermoplastique transparente, il peut s'agir d'élastomères thermoplastiques et de thermoplastiques rigides. A titre d'exemple, il peut s'agir d'un ou plusieurs des polymères suivants : des thermoplastiques copolymères acryliques, des thermoplastiques polyuréthanes (TPU), des thermoplastiques oléfiniques (TPO), des copolyesters (TPC), des polyamides (TPA), des polycarbonates (PC), des polyméthacrylates de méthyl (PMMA), des polyéthylènes téréphtalates (PET), des polyéthylènes furanoates (PEF), des styrènes acrylonitriles (SAN), des polysulfones (PSU), des silicones, des fluoroélastomères (FKM) et des thermoplastiques élastomères styréniques (TPS).

Pour la résine thermodurcissable transparente, c'est-à-dire les résines réticulées/vulcanisées, il peut, à titre d'exemple, s'agir des silicones, des élastomères fluorés et des élastomères polyuréthanes (PUR).

Le composé phosphorescent peut être formé d'un pigment ou d'un pigment encapsulé dans une coque. Le pigment est de préférence un dérivé d'aluminate alcalino-terreux dopé aux terres rares. Plus spécifiquement, le pigment peut être de l'aluminate de strontium dopés Europium, Dysprosium avec la formule Sr(x)AI(y)O(z) : Eu²⁺,Dy³⁺. En particulier, il peut s'agir du Sr₄Al₁₄O₂₅ : Eu²⁺, Dy³⁺ ou encore du SrAl₂O₄ : Eu²⁺,Dy³⁺, éventuellement tous deux présents dans le composé phosphorescent. Préférentiellement, les pigments ont un diamètre maximal inférieur ou égal à 20 µm mesuré par analyse granulométrique laser selon la norme ISO 13320:2020, la taille restreinte des pigments permettant de limiter leur impact sur la transparence de la matière et d'éviter de créer des amorces de rupture dans la matière.

Les pigments peuvent éventuellement être encapsulés dans une coque organique ou minérale transparente aux UVs proches et dans le visible. La coque organique peut typiquement être choisie parmi les polymères cités pour la matrice polymérique. Pour une coque minérale, il pourrait par exemple s'agir d'une coque en silice (SiO₂) obtenue via un procédé sol-gel. Toujours à titre d'exemple, on peut citer d'autres coques minérales telles que l'oxyde de zirconium (ZrO₂), l'oxyde d'aluminium (Al₂O₃), etc.

De préférence, la matière comporte de la silice poreuse. Avantageusement, il s'agit d'une silice poreuse provenant de squelettes de diatomées. On peut citer par exemple la marque Algica produite par Swedish Algae Factory. Typiquement, le diamètre moyen des pores est compris entre et 50 nm and 5µm, la silice est dès lors qualifiée de silice nanoporeuse. Typiquement, le diamètre moyen des pores est de l'ordre de 500 nm mesuré par analyse granulométrique laser selon la norme ISO 13320:2020.

Eventuellement, il pourrait s'agir d'une silice nanoporeuse synthétique. Pour une silice synthétique, les pores ont typiquement un diamètre moyen compris entre 0,1 µm et 3 µm.

La matière comporte de préférence également un azurant optique pour donner un éclat de blancheur à la matière. Les azurants optiques utilisés sont des molécules organiques synthétiques dérivées des stilbènes contenant des groupements sulfonates qui absorbent entre 300 nm et 400 nm et réémettent dans le bleu-violet. Ils sont principalement utilisés dans le matériau comme agent blanchissant. Par exemple, il s'agit du distyrylbiphényle (DSBP) et des dérivés de diaminostilbène.

La matière comporte également optionnellement un système d'au moins un colorant et d'un ou plusieurs additifs. Ce système comporte préférentiellement des colorants organiques qui n'absorbent pas dans les plages de longueur d'onde d'émission du pigment phosphorescent. Il peut s'agir de pigments ou de colorants fluorescents dont l'absorption est plutôt dans les UVs et l'émission dans le spectre visible. Par exemple, il peut s'agir de pigments ou colorants fluorescents organiques comme ceux de la marque Radiant ou Aralon^{®}. Il peut également s'agir de pigments ou de colorants translucides absorbant peu dans les longueurs d'onde d'émission du pigment phosphorescent. Par exemple, il peut s'agir de pigments ou colorants translucides de la marque Clariant. D'autres additifs tels que des pigments à effet métallisé et nacré et des additifs anti-UVs pour protéger la matrice polymérique peuvent être ajoutés.

La matière peut être moulée par des moyens de mise en oeuvre classiques. Pour les matières thermoplastiques, elles sont de préférence moulées par injection. Pour les matières à vulcaniser, elles sont de préférence moulées par compression ou par injection.

Si souhaité, la matière polymérisée peut ensuite être décorée par impression digitale ou tampographie.

Des essais ont été réalisés avec une résine élastomère thermoplastique polyuréthane avec un pourcentage de pigments phosphorescents type aluminate de strontium dopé Europium et Dysprosium compris entre 1 et 5% en poids, avec un pourcentage de 0,1% en poids de silice et avec un pourcentage de 0,1% en poids d'azurant optique, le complément pour 100% étant la résine élastomère thermoplastique polyuréthane. On observe qu'avec 1% de pigments phosphorescents, la matière est complètement transparente et qu'avec un taux croissant de pigments, elle devient translucide. Un optimum est dès lors obtenu pour une teneur en pigments phosphorescents proche de 1% en poids. Une analyse luminancemètre selon la norme ISO17514: 2024 a montré que la transparence de jour est conservée avec un effet luminescent de nuit suffisant. Au temps 0, l'intensité lumineuse est de 8,7 mCd/m² et après 600 secondes, elle est de 1,6 mCd/m².

## Revendications

1. Composant horloger réalisé dans une matière phosphorescente transparente ou translucide, ladite matière comprenant en poids entre 95 et 99,5% d'une résine thermoplastique ou thermodurcissable transparente, entre 0,5 et 5% de composés phosphorescents, entre 0 et 0,3% d'une silice poreuse, entre 0 et 0,3% d'au moins un azurant optique, et entre 0 et 5% d'au moins un colorant et/ou d'au moins un additif.

2. Composant horloger selon la revendication précédente, **caractérisé en ce que** ladite matière comprend en poids entre 96,9 et 99,2% de la résine thermoplastique ou thermodurcissable, entre 0,7 et 3% de de composés phosphorescents, entre 0,05 et 0,2% de silice poreuse, entre 0,05 et 0,2% de l'azurant optique, et entre 0 et 3% du colorant et/ou de l'additif.

3. Composant horloger selon l'une des revendications précédentes, **caractérisé en ce que** ladite matière comprend en poids entre 97,84 et 98,94% de la résine thermoplastique ou thermodurcissable, entre 0,9 et 2% de composés phosphorescents, entre 0,08 et 0,15% de silice poreuse, entre 0,08 et 0,15% de l'azurant optique, et entre 0 et 3% du colorant et/ou de l'additif.

4. Composant horloger selon l'une des revendications précédentes, **caractérisé en ce que** ladite matière comprend en poids entre 98,54 et 98,94% de la résine thermoplastique ou thermodurcissable, entre 0,9 et 1,3% de composés phosphorescents, entre 0,08 et 0,13% de silice poreuse, entre 0,08 et 0,13% de l'azurant optique, et entre 0 et 3% du colorant et/ou de l'additif.

5. Composant horloger selon l'une des revendications précédentes, **caractérisé en ce que** la résine thermoplastique transparente est choisie parmi le polyamide, le polycarbonate, le polyméthacrylate de méthyl, le polyéthylène téréphtalate, le polyéthylène furanoate, le styrène acrylonitrile, le polysulfone, le polyuréthane, les oléfines, le styrène, le copolyester, l'élastomère et le fluoroélastomère.

6. Composant horloger selon l'une des revendications 1 à 5, **caractérisé en ce que** la résine thermodurcissable transparente est choisie parmi des silicones, des élastomères fluorés et des élastomères polyuréthanes.

7. Composant horloger selon l'une des revendications précédentes, **caractérisé en ce que** la silice poreuse est issue de squelettes de diatomées.

8. Composant horloger selon l'une des revendications précédentes, **caractérisé en ce que** la silice nanoporeuse a un diamètre moyen des pores compris entre 50 nm et 5 µm.

9. Composant horloger selon l'une des revendications précédentes, **caractérisé en ce que** les composés phosphorescents comportent un pigment phosphorescent qui est un dérivé d'aluminate alcalino-terreux dopé aux terres rares.

10. Composant horloger selon la revendication précédente, **caractérisé en ce que** le pigment phosphorescent est un dérivé d'aluminate alcalino-terreux dopé Europium, Dysprosium de formule Sr(x)AI(y)O(z) : Eu²⁺,Dy³⁺.

11. Composant horloger selon la revendication précédente, **caractérisé en ce que** le pigment phosphorescent est du Sr₄Al₁₄O₂₅ : Eu²⁺,Dy³⁺ et/ou du SrAl₂O₄ : Eu²⁺,Dy³.

12. Composant horloger selon l'une des revendications 9 à 11, **caractérisé en ce que** le pigment phosphorescent a un diamètre maximal inférieur ou égal à 20 µm mesuré par analyse granulométrique laser selon la norme ISO 13320:2020.

13. Composant horloger selon l'une des revendications précédentes, **caractérisé en ce que** l'azurant optique est un dérivé du stilbène contenant un groupement sulfonate.

14. Composant horloger selon l'une des revendications précédentes, **caractérisé en ce qu'**il s'agit d'une carrure, un fond, une lunette, un maillon de bracelet, un bracelet (1), une boucle ardillon, un fermoir, un cadran, une aiguille, un index de cadran ou une masse oscillante.

15. Composant horloger selon l'une des revendications précédentes, **caractérisé en ce qu'**il s'agit d'un bracelet (1) ou d'une carrure.
